# EUROPEAN PATENT APPLICATION

(11) **EP 4 764 748 A2**
(43) Date of publication of application: **24.06.2026**
(21) Application number: 25224685.5
(22) Date of filing: 17.12.2025
(51) Int. Cl.: G05B 19/404, G05B 19/416

(54) **CONTROL DEVICE, MACHINE TOOL, CONTROL METHOD, AND COMPUTER PROGRAM**

(30) Priority: 20.12.2024 JP 2024225729
(71) Applicant: Brother Kogyo Kabushiki Kaisha, Nagoya-shi, Aichi 467-8561 (JP)
(72) Inventor: TERADA, Yuzuru, Nagoya, 467-8562 (JP); KOBAYASHI, Taiki, Nagoya, 467-8562 (JP)
(74) Representative: Prüfer & Partner mbB Patentanwälte · Rechtsanwälte

(57) **Abstract**

A control device that controls a rotation shaft of a machine tool. The control device is configured to execute estimation processing of estimating an inertia of the rotation shaft; determination processing of determining a gain of a drive unit configured to drive the rotation shaft, based on the inertia estimated by the estimation processing; and drive processing of driving the rotation shaft with the gain determined in the determination processing, the rotation shaft reaching a target speed.

## Description

### BACKGROUND ART

There is a machine tool that monitors inertia of a tool attached to a spindle during rotation of the spindle and stops a spindle motor driving the spindle when the inertia becomes equal to or greater than a threshold value. The machine tool can reduce, by stopping the spindle motor, a possibility that a connection position between an output shaft of the spindle motor and the spindle is misaligned.

The machine tool performs, for example, feedback control on the spindle. A gain of the feedback control is generally fixed to a value that enables stable control from a state in which no tool is attached to the spindle to a state in which a tool whose inertia is up to a design upper limit is attached to the spindle. For example, even when the inertia of the tool attached to the spindle is less than the design upper limit, responsiveness of the spindle decreases due to an increase in the inertia of the entire spindle including the attached tool. The decrease in the responsiveness of the spindle is problematic because a synchronization error increases particularly when the spindle and another axis are synchronously controlled, for example, when rotation of the spindle and rotation of a holding table that holds a workpiece are synchronously controlled and skiving machining for performing gear machining is performed.

The present disclosure has been made in view of such circumstances, and an object thereof is to provide a control device, a machine tool, a control method, and a computer program capable of preventing a decrease in responsiveness of a rotation shaft even when inertia of the rotation shaft increases.

### SUMMARY

A control device that controls a rotation shaft of a machine tool, in which the control device is configured to execute: estimation processing of estimating an inertia of the rotation shaft; determination processing of determining a gain of a drive unit configured to drive the rotation shaft, based on the inertia estimated by the estimation processing; and drive processing of driving the rotation shaft with the gain determined in the determination processing, the rotation shaft reaching a target speed.

### BRIEF DESCRIPTION OF DRAWINGS

FIG. 1 is a perspective view illustrating a machine tool according to Embodiment 1.
FIG. 2 is a block diagram illustrating a control device.
FIG. 3 is a block diagram illustrating information exchanged within and between the control device and a spindle motor.
FIG. 4 is a block diagram illustrating a functional configuration of a servo circuit.
FIG. 5 is a block diagram illustrating calculation processing of an estimated tool inertia which is executed by a disturbance observer.
FIG. 6 is a conceptual diagram illustrating an example of a machining program.
FIG. 7 is a flowchart illustrating an example of machining processing executed by a controller.
FIG. 8 is a flowchart illustrating an example of the machining processing executed by the controller.
FIG. 9 is a conceptual diagram illustrating a table storing tool numbers and synchronous control inertias according to Embodiment 2.
FIG. 10 is a flowchart illustrating an example of the machining processing executed by the controller.
FIG. 11 is a conceptual diagram illustrating a table storing the tool numbers and synchronous control gains according to Embodiment 3.
FIG. 12 is a flowchart illustrating an example of the machining processing executed by the controller.
FIG. 13 is a conceptual diagram illustrating a table storing gain margins, phase margins, and synchronous control gains according to Embodiment 4.
FIG. 14 is a flowchart illustrating an example of the machining processing executed by the controller.

### DESCRIPTION

### (Embodiment 1)

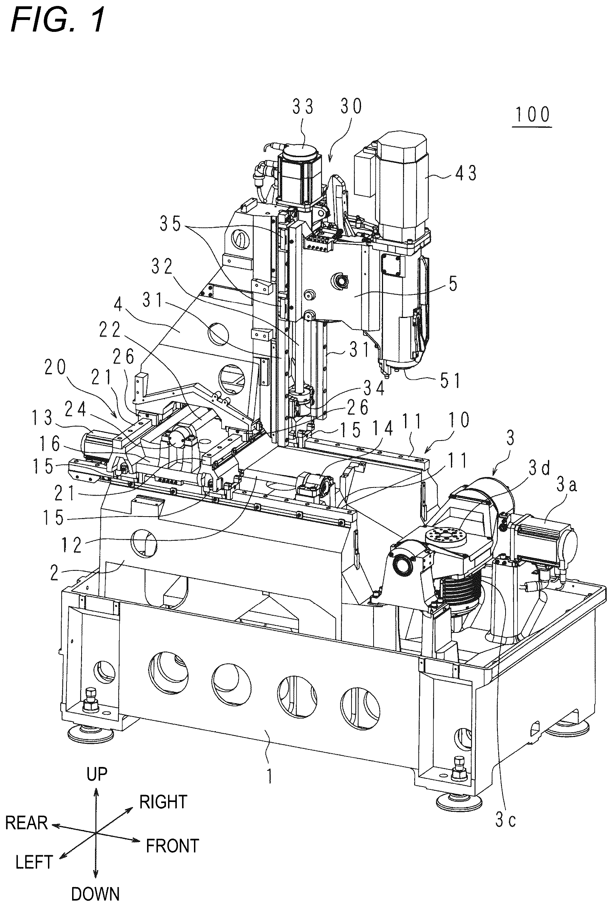

Hereinafter, the present invention will be described with reference to the drawings illustrating a machine tool 100 according to an embodiment. FIG. 1 is a perspective view illustrating the machine tool 100. In the following description, up and down, left and right, and front and rear indicated by arrows in the drawings are used. As illustrated in FIG. 1, the machine tool 100 includes a rectangular base 1 extending in a front-rear direction. A workpiece holding unit 3 is provided on a front side of an upper portion of the base 1. The workpiece holding unit 3 includes a holding table 3d configured to hold a workpiece, an A-axis motor 3a configured to rotate the holding table 3d about an A-axis extending in a left-right direction, and a C-axis motor 3c configured to rotate the holding table 3d about a C-axis extending in an up-down direction. The holding table 3d rotated around the C-axis by the C-axis motor 3c constitutes a second rotation shaft. A support table 2 is provided on a rear side of the upper portion of the base 1 and supports an upright column 4.

A Y-axis direction moving mechanism 10 is provided above the support table 2 and is configured to move a moving plate 16 in the front-rear direction. The Y-axis direction moving mechanism 10 includes two tracks 11 extending in the front-rear direction, a Y-axis screw shaft 12, a Y-axis motor 13, and bearings 14. The respective tracks 11 are provided on left and right sides of an upper portion of the support table 2. The Y-axis screw shaft 12 extends in the front-rear direction and is provided between the two tracks 11. The bearings 14 are provided at a front end portion and an intermediate portion (not illustrated) of the Y-axis screw shaft 12. The Y-axis motor 13 is connected to a trailing end portion of the Y-axis screw shaft 12. A nut (not illustrated) is screwed to the Y-axis screw shaft 12 via a rolling element (not illustrated). The rolling element is, for example, a ball. A plurality of sliders 15 are slidably provided on each track 11. The moving plate 16 extends in a horizontal direction and is connected to the nut and upper portions of the sliders 15. The Y-axis screw shaft 12 is rotated by rotation of the Y-axis motor 13, so that the nut moves in the front-rear direction, and the moving plate 16 moves in the front-rear direction.

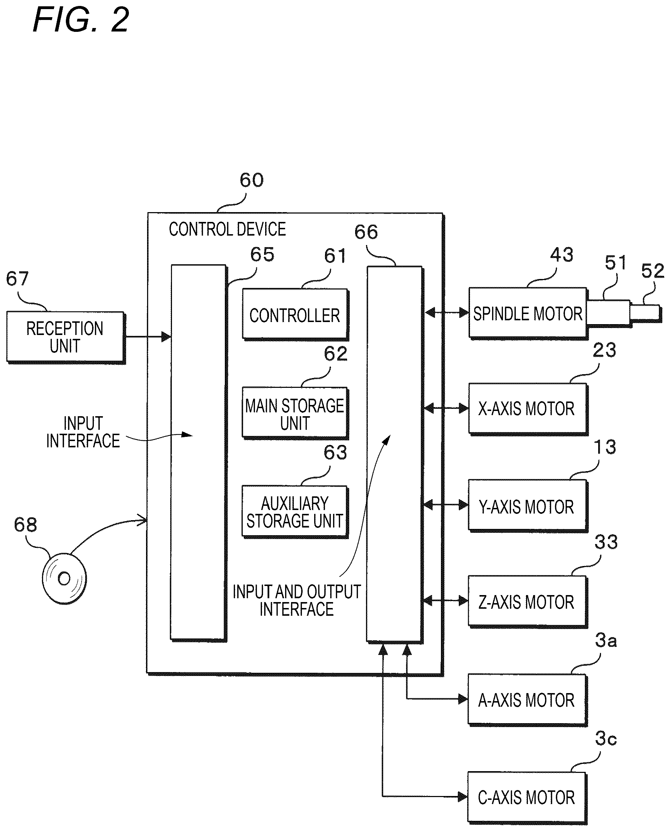

An X-axis direction moving mechanism 20 is provided on an upper surface of the moving plate 16 and moves the upright column 4 in the left-right direction. The X-axis direction moving mechanism 20 includes two tracks 21 extending in the left-right direction, an X-axis screw shaft 22, an X-axis motor 23 (see FIG. 2), and bearings 24. The respective tracks 21 are provided on front and rear sides of the upper surface of the moving plate 16. The X-axis screw shaft 22 extends in the left-right direction and is provided between the two tracks 21. The bearings 24 are provided at a left end portion and an intermediate portion (not illustrated) of the X-axis screw shaft 22. The X-axis motor 23 is connected to a right end portion of the X-axis screw shaft 22. A nut (not illustrated) is screwed to the X-axis screw shaft 22 via a rolling element (not illustrated). A plurality of sliders 26 are slidably provided on each track 21. The upright column 4 is connected to the nut and upper portions of the sliders 26. The X-axis screw shaft 22 is rotated by rotation of the X-axis motor 23, so that the nut moves in the left-right direction, and the upright column 4 moves in the left-right direction.

A Z-axis direction moving mechanism 30 is provided on a front surface of the upright column 4 and moves a spindle head 5 in the up-down direction. The Z-axis direction moving mechanism 30 includes two tracks 31 extending in the up-down direction, a Z-axis screw shaft 32, a Z-axis motor 33, and bearings 34. The tracks 31 are respectively provided on left and right sides of the front surface of the upright column 4. The Z-axis screw shaft 32 extends in the up-down direction and is provided between the two tracks 31. The bearings 34 are provided at a lower end portion and an intermediate portion (not illustrated) of the Z-axis screw shaft 32. The Z-axis motor 33 is connected to an upper end portion of the Z-axis screw shaft 32. A nut (not illustrated) is screwed to the Z-axis screw shaft 32 via a rolling element (not illustrated). A plurality of sliders 35 are slidably provided on each track 31. The spindle head 5 is connected to the nut and front portions of the sliders 35. The Z-axis screw shaft 32 is rotated by rotation of the Z-axis motor 33, so that the nut moves in the up-down direction, and the spindle head 5 moves in the up-down direction.

A spindle 51 extending in the up-down direction is provided in the spindle head 5. The spindle 51 is configured to rotate about an axis of the spindle 51. A spindle motor 43 is provided at an upper end portion of the spindle head 5. A tool 52 (see FIG. 2) is attached to a lower end portion of the spindle 51. The spindle 51 is rotated by rotation of the spindle motor 43, so that the tool 52 is rotated. The rotating tool 52 machines a workpiece held by the workpiece holding unit 3. The spindle 51 constitutes a rotation shaft, and the spindle motor 43 constitutes a drive unit.

FIG. 2 is a block diagram illustrating a control device 60. The machine tool 100 includes the control device 60 configured to control driving of the spindle motor 43, the Y-axis motor 13, the X-axis motor 23, the Z-axis motor 33, the A-axis motor 3a, the C-axis motor 3c, and the like. As illustrated in FIG. 2, the control device 60 includes a controller 61, a main storage unit 62, an auxiliary storage unit 63, an input interface 65, an input and output interface 66, and the like.

The controller 61 includes, for example, a processor or a logic circuit. The processor includes, for example, a CPU, an MPU, or a GPU. The logic circuit includes, for example, an FPGA or an ASIC. The main storage unit 62 includes, for example, a RAM. The auxiliary storage unit 63 includes a rewritable storage device, such as an EEPROM, a flash ROM, or a hard disk. The controller 61 may include, for example, a plurality of processors or logic circuits. The controller 61 is configured to execute multiple types of processing such as various calculation processing and control processing. The multiple types of processing may be executed by one processor or logic circuit included in the controller 61, or may be executed in a distributed manner by the plurality of processors or logic circuits included in the controller 61. A processor or a logic circuit that executes one type of processing and a processor or a logic circuit that executes another type of processing may exist separately.

The auxiliary storage unit 63 stores a control program. The control program includes a machining program for machining a workpiece, a program for executing machining processing described later, and the like. The controller 61 reads the machining program from the auxiliary storage unit 63 to the main storage unit 62 and executes the machining program. The machining program includes a plurality of lines (commands). The controller 61 sequentially reads the lines and issues a command for driving each unit by executing the command. The controller 61 stores, in the auxiliary storage unit 63, data generated by executing the machining program. The machining program may be stored in a storage medium 68 such as an optical disk, a flash memory, or a hard disk, and may be downloaded from the storage medium 68 to the auxiliary storage unit 63. Alternatively, the machining program may be downloaded from an external server to the auxiliary storage unit 63 via a network (not illustrated).

Processing executed using the machining program, for example, the machining processing described later may be implemented by the controller 61 or an external server, or may be implemented by distributed processing executed by the controller 61 and a device other than the controller 61, for example, a terminal (not illustrated) different from the control device 60 or an external server. The terminal may be, for example, a portable device such as a smartphone, a tablet computer, a laptop computer, or a remote controller, or may be a stationary device such as a desktop personal computer.

The auxiliary storage unit 63 is configured to store in advance a variable n indicating a line number described later, an inertia Jsp of the spindle 51 to which no tool is attached, a variable Kvp indicating a speed proportional gain, the number of estimations, and the like. The inertia Jsp is obtained by an experiment. The variable Kvp stores, as an initial value, a speed proportional gain K0 obtained when no tool is attached. The speed proportional gain K0 is a speed proportional gain at which the spindle 51 can be stably rotated, and is obtained by an experiment performed when no tool is attached so as to satisfy, for example, a gain margin of 15 dB and a phase margin of 40 deg.

The machine tool 100 further includes a reception unit 67. The reception unit 67 includes, for example, a keyboard, a touch panel, and a display screen, and receives an operation of a user. The control device 60 is configured to receive a signal from the reception unit 67 via the input interface 65. The control device 60 is configured to issue a position command or a speed command to the spindle motor 43, the X-axis motor 23, the Y-axis motor 13, the Z-axis motor 33, the A-axis motor 3a, and the C-axis motor 3c, via the input and output interface 66. The control device 60 is configured to acquire position information and current information of each of the spindle motor 43, the X-axis motor 23, the Y-axis motor 13, the Z-axis motor 33, the A-axis motor 3a, and the C-axis motor 3c, via the input and output interface 66.

In a case where the controller 61 executes the machining processing, the controller 61 issues commands to the spindle motor 43, the X-axis motor 23, the Y-axis motor 13, the Z-axis motor 33, the A-axis motor 3a, and the C-axis motor 3c to control rotation of the spindle 51, movement of the X-axis direction moving mechanism 20, the Y-axis direction moving mechanism 10, and the Z-axis direction moving mechanism 30, and rotation of the holding table 3d. Thus, the controller 61 is configured to machine the workpiece using the tool 52 attached to the spindle 51.

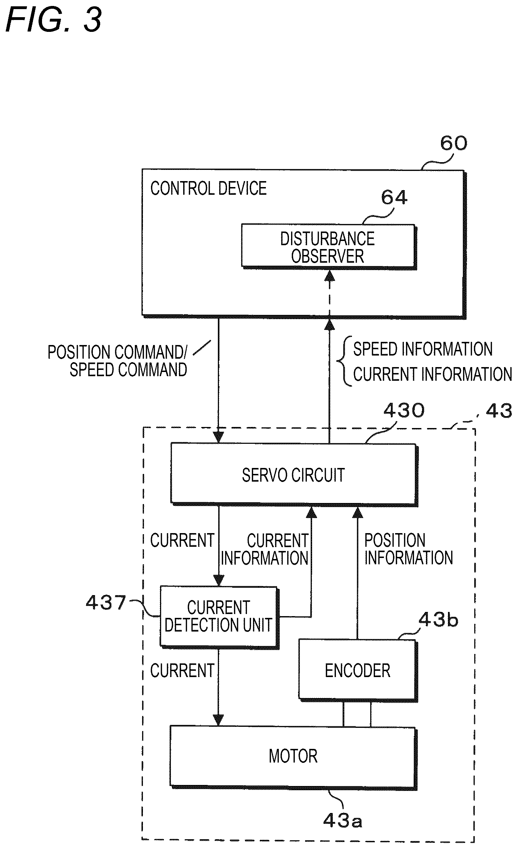

Next, a flow of information between the spindle motor 43 and the control device 60 will be described. FIG. 3 is a block diagram illustrating information exchanged within and between the control device 60 and the spindle motor 43. A disturbance observer 64 included in the control device 60 is one of functional blocks implemented by the control device 60 including the controller 61 illustrated in FIG. 2. The spindle motor 43 includes a motor 43a configured to drive the spindle 51, and a servo circuit 430 configured to feedback-control a current flowing through the motor 43a based on one or both of the position command and the speed command received from the control device 60. The current flowing through the motor 43a is detected by a current detection unit 437. The current detection unit 437 feeds back current information indicating the detected current to the servo circuit 430. Each of the X-axis motor 23, the Y-axis motor 13, the Z-axis motor 33, the A-axis motor 3a, and the C-axis motor 3c also includes a servo circuit similar to the servo circuit 430.

The motor 43a is, for example, an AC servo motor having a magnet in a rotor. A rotational position of the motor 43a is detected by an encoder 43b. The encoder 43b is configured to feed back position information indicating the detected rotational position to the servo circuit 430 as a pulse signal. The servo circuit 430 is configured to generate speed information based on the position information.

The disturbance observer 64 is configured to acquire the speed information and the current information from the servo circuit 430, obtain disturbance acting on the motor 43a, and estimate an inertia of the tool 52 attached to the spindle 51.

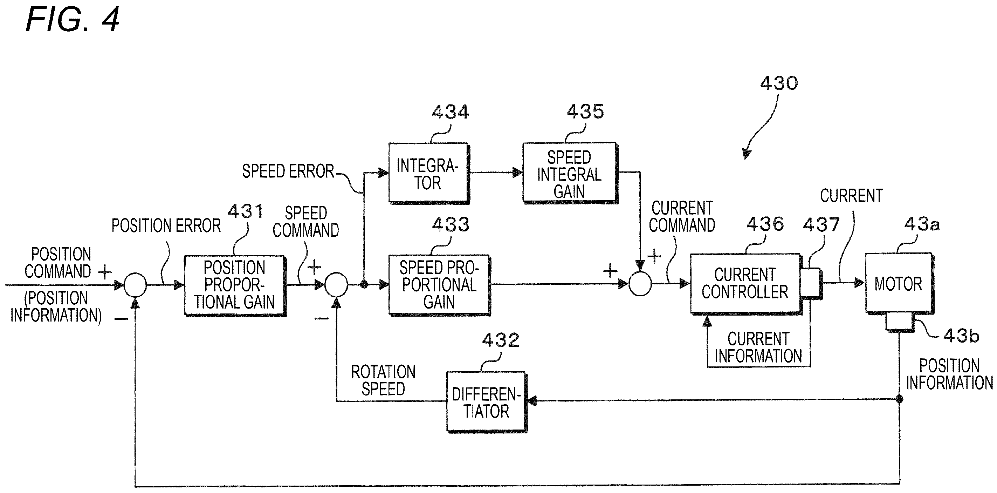

FIG. 4 is a block diagram illustrating a functional configuration of the servo circuit 430. The same applies to the servo circuit of each of the X-axis motor 23, the Y-axis motor 13, the Z-axis motor 33, the A-axis motor 3a, and the C-axis motor 3c. In the figure, reference numerals 431, 433, and 435 denote amplifiers whose amplification degrees are a position proportional gain, a speed proportional gain, and a speed integral gain, respectively. The servo circuit 430 includes an amplifier 431. The amplifier 431 is configured to amplify a position error, which is a difference between a target position included in the position command and a position indicated by the position information fed back by the encoder 43b, to generate a speed command. The servo circuit 430 also includes a differentiator 432, an amplifier 433, an integrator 434, and an amplifier 435. The differentiator 432 is configured to differentiate the position indicated by the position information once to generate a rotation speed of the motor 43a. The amplifier 433 is configured to amplify a speed error that is a difference between the speed command generated by the amplifier 431 and the rotation speed generated by the differentiator 432. The integrator 434 and the amplifier 435 is configured to integrate and amplify the speed error.

In the example illustrated in FIG. 4, the current command is obtained by adding an amount proportional to an integration result of the speed error amplified by the amplifier 435 to an amount proportional to the speed error amplified by the amplifier 433. Thus, so-called PI control is performed. The servo circuit 430 further includes a current controller 436 configured to feedback-control the current flowing through the motor 43a based on the current command. The current detection unit 437 feeds back the current information indicating the detected current to the current controller 436. The current controller 436 performs control such that a current corresponding to the current command flows through the motor 43a.

In FIG. 4, the operation of the servo circuit 430 when the controller 61 issues the position command has been described. However, when the controller 61 issues the speed command, the speed command received from the controller 61 may be used instead of the speed command generated by the amplifier 431. When the controller 61 simultaneously issues the position command and the speed command, operations when the position command and the speed command are individually issued may be superimposed.

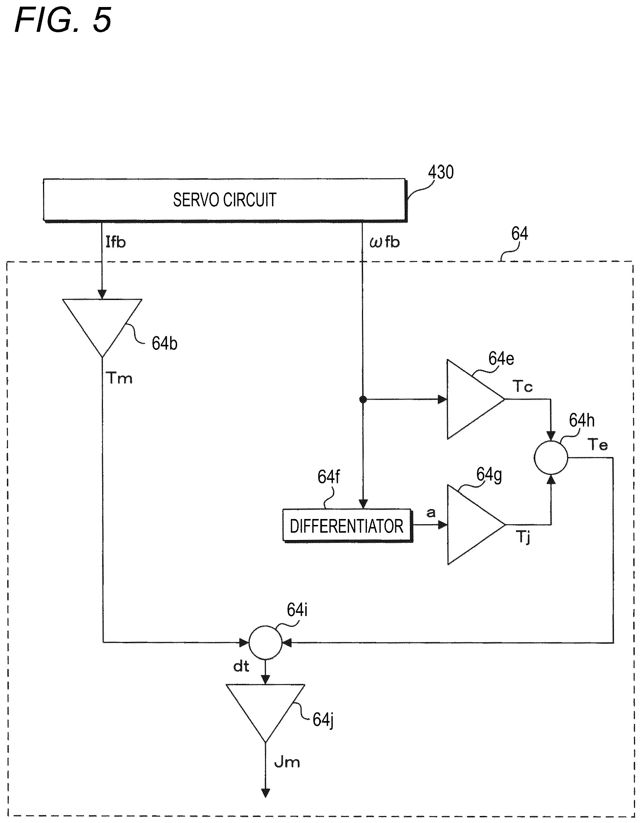

FIG. 5 is a block diagram illustrating calculation processing of an estimated tool inertia which is executed by the disturbance observer 64. The disturbance observer 64 is configured to obtain the estimated inertia of the tool 52 attached to the spindle 51 at a predetermined cycle, and perform calculation of an estimated tool inertia Jm. The estimated tool inertia Jm is calculated based on current information Ifb and rotation speed ωfb.

The servo circuit 430 is configured to output the current information Ifb [A] to a multiplier 64b. The current information Ifb is a current value of the current flowing through the motor 43a. The multiplier 64b is configured to multiply the current information Ifb by a torque constant kt of the motor 43a to calculate an output torque Tm [Nm] generated in the motor 43a. The output torque Tm is output to an adder 64i.

The servo circuit 430 is configured to output the rotation speed ωfb [rad/s] to a multiplier 64e. The multiplier 64e is configured to multiply the rotation speed ωfb by a viscous resistance coefficient Ct indicating a speed-proportional resistance of the spindle 51 to calculate an estimated viscous torque Tc [Nm] generated in the spindle 51.

A differentiator 64f is configured to differentiate the rotation speed ωfb to calculate an angular acceleration a [rad/s2] during the rotation of the spindle 51. A multiplier 64g is configured to multiply the angular acceleration a by a spindle inertia Jt [kg·m2] to calculate an estimated inertia torque Tj [Nm]. An adder 64h is configured to add the estimated viscous torque Tc and the estimated inertia torque Tj to calculate an estimated acceleration and deceleration torque Te [Nm].

The adder 64i is configured to calculate a difference value dt [Nm] that is a deviation between the output torque Tm calculated based on the current information Ifb, and the estimated acceleration and deceleration torque Te calculated based on the rotation speed ωfb. Ina state in which no tool is attached to the spindle 51 and there is no disturbance due to machining, the difference value dt between the estimated acceleration and deceleration torque Te and the output torque Tm during acceleration or deceleration of the spindle 51 is substantially zero. In a state in which the tool 52 is attached to the spindle 51, the difference value dt during acceleration or deceleration of the spindle 51 is an inertia torque corresponding to the inertia of the tool 52 attached to the spindle 51. The machining is started after the spindle 51 reaches a command speed, and the difference value dt is the inertia torque corresponding to the inertia of the tool 52 attached to the spindle 51. Therefore, the multiplier 64j calculates the estimated tool inertia Jm [kg·m2] by dividing the calculated difference value dt by the angular acceleration a, that is, multiplying the difference value dt by 1/a.

The estimated tool inertia Jm may be obtained as follows. An estimated tool total inertia Jt is a sum of the inertia Jsp of the spindle 51 to which no tool is attached and the estimated tool inertia Jm. An average value of the angular accelerations a during acceleration / an average value of the output torques Tm during acceleration = the total inertia Jt. An initial rotation speed ωfb / a time Ta taken for acceleration = the angular acceleration a. The estimated tool inertia Jm is obtained by subtracting the inertia Jsp from the total inertia Jt.

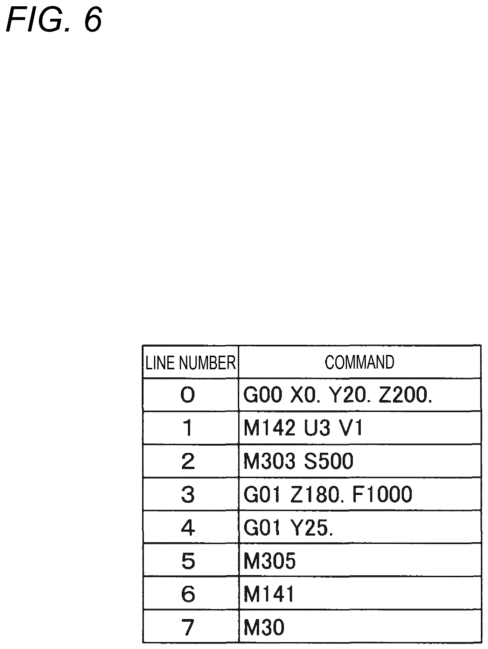

FIG. 6 is a conceptual diagram illustrating an example of the machining program. The machining program in FIG. 6 illustrates an example of skiving machining in which the rotation of the spindle 51 to which the tool 52 is attached and rotation of a turning spindle, that is, the holding table 3d to which a workpiece is attached are synchronized to perform machining. The controller 61 is configured to sequentially read lines and executes commands in the read lines. In FIG. 6, "G00" in a line number 0 indicates rapid feed movement of the spindle 51, and "G00 X0. Y20. Z200." indicates that the spindle 51 moves to an X position of 0 mm, a Y position of 20 mm, and a Z position of 200 mm. "M142" in a line number 1 indicates enabling synchronous control of the spindle 51 and the holding table 3d. That is, the rotation of the spindle 51 and the rotation of the holding table 3d about the C-axis are synchronized. "U3 V1" indicates a ratio between the rotation speed of the spindle 51 and the rotation speed of the holding table 3d about the C-axis. U is a denominator of the ratio, and V is a numerator of the ratio. In the line number 1, the ratio is 3/1. That is, "M142 U3 V1" indicates that the rotation of the spindle 51 and the rotation of the holding table 3d about the C-axis are synchronized such that the holding table 3d is rotated once while the spindle 51 is rotated three times.

"M303" in a line number 2 is a synchronous rotation command for the spindle 51 with respect to the holding table 3d. Since "M142 U3 V1" is executed in the line number 1, "M303 S500" indicates that the holding table 3d is synchronously rotated at a rotation speed of 500 min-1 and the spindle 51 is synchronously rotated at a rotation speed of 1500 min-1. "G01" in a line number 3 indicates cutting movement of the spindle 51 at a set feed rate, and "G01 Z180. F1000" indicates that the spindle 51 moves at 1000 mm-1 to a Z position of 180 mm. The spindle 51 is rotated by the command in the line number 2, and the spindle 51 moves while machining the workpiece by the command in the line number 3. "G01 Y25" in a line number 4 indicates that the spindle 51 moves to the Y position of 25 mm, and the spindle 51 moves while machining the workpiece. In the command in the line number 4, the spindle 51 moves in a direction away from the workpiece, and the tool 52 moves away from the workpiece at the Y position of 25 mm and does not perform machining.

"M305" in a line number 5 indicates a stop command to the holding table 3d, and at the same time, the spindle 51 is also stopped. "M141" in a line number 6 indicates a disabling command for the synchronous control of the spindle 51 and the holding table 3d performed by "M142 U3 V1", that is, a disabling command for M142. M30 in a line number 7 indicates end of the machining program. M30 is a command in the last line.

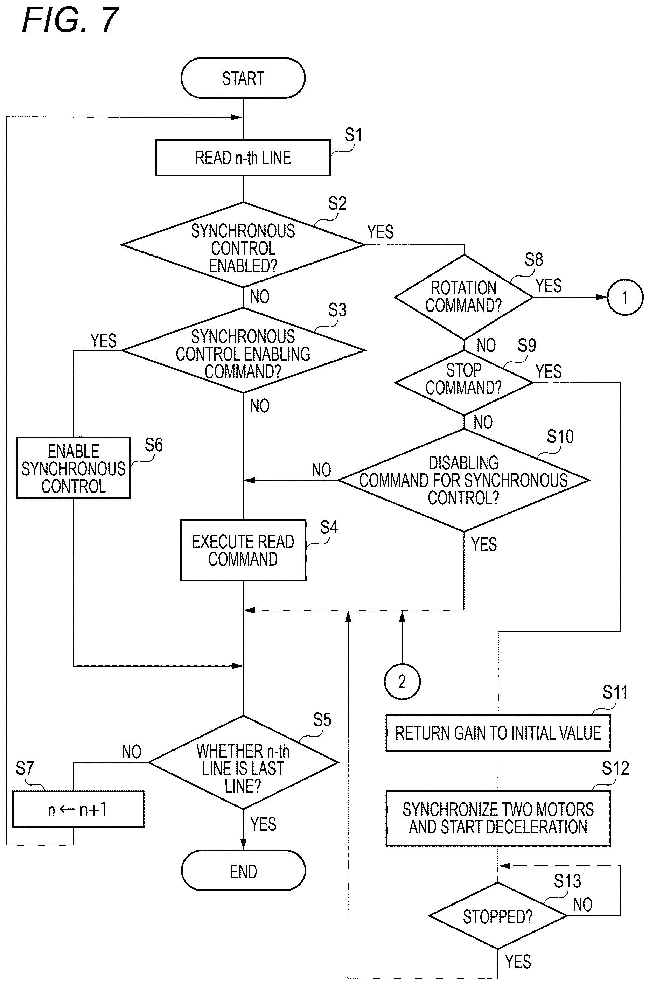

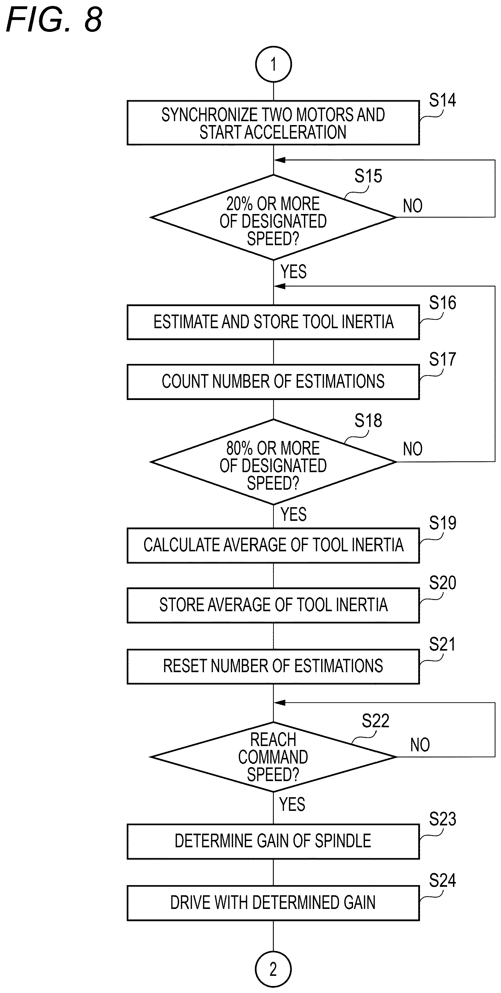

FIGS. 7 and 8 are flowcharts illustrating an example of the machining processing executed by the controller 61. As described above, the auxiliary storage unit 63 is configured to store the variable n indicating the line number. The variable n stores 0 as an initial value. The tool 52 is attached to the spindle 51.

The controller 61 reads a n-th line of the machining program (S1). The controller 61 determines whether the synchronous control of the spindle 51 and the holding table 3d is enabled (S2). That is, the controller 61 determines whether M142 is executed and M141 is not executed. Processing of step S2 executed by the controller 61 constitutes third determination processing.

If the controller 61 determines that the synchronous control is not enabled (S2: NO), the controller 61 determines whether the read command is a synchronous control enabling command, that is, M142 (S3). If the controller 61 determines that the read command is the synchronous control enabling command (S3: YES), the controller 61 enables the synchronous control (S6), and the controller 61 determines whether the read command is the command in the last line, that is, M30 (S5). If the controller 61 determines that the read command is not the command in the last line (S5: NO), the controller 61 adds 1 to n (S7), and returns the processing to step S1. If the controller 61 determines that the read command is the command in the last line (S5: YES), the controller 61 ends the processing.

If the controller 61 determines in step S3 that the read command is not the synchronous control enabling command (S3: NO), the controller 61 executes the read command (S4). That is, the controller 61 executes control other than the synchronous control. The controller 61 advances the processing to step S5.

If the controller 61 determines in step S2 that the synchronous control is enabled (S2: YES), the controller 61 determines whether the read command is the synchronous rotation command, that is, M303 (S8). If the controller 61 determines that the read command is not the synchronous rotation command (S8: NO), the controller 61 determines whether the read command is the stop command, that is, M305 (S9). If the controller 61 determines that the read command is not the stop command (S9: NO), the controller 61 determines whether the read command is the disabling command for the synchronous control, that is, M141 (S10). If the controller 61 determines that the read command is not the disabling command for the synchronous control (S10: NO), the controller 61 advances the processing to step S4. If the controller 61 determines that the read command is the disabling command for the synchronous control (S10: YES), the controller 61 advances the processing to step S5. Processing of step S9 executed by the controller 61 constitutes determination processing. The processing of step S9 may be processing of determining whether the read command is a deceleration command for decelerating the spindle 51.

If the controller 61 determines in step S8 that the read command is the synchronous rotation command (S8: YES), the controller 61 synchronously starts acceleration of the spindle motor 43 and the C-axis motor 3c (S14). The controller 61 determines whether a rotation speed of the spindle motor 43 is 20% or more of the command speed (S15). If the controller 61 determines that the rotation speed of the spindle motor 43 is not 20% or more of the command speed (S15: NO), the controller 61 returns the processing to step S15.

If the controller 61 determines that the rotation speed of the spindle motor 43 is 20% or more of the command speed (S15: YES), the controller 61 estimates the tool inertia Jm and stores the tool inertia Jm in the auxiliary storage unit 63 (S16). The controller 61 counts the number of estimations (S17). The auxiliary storage unit 63 stores the number of estimations.

The controller 61 determines whether the rotation speed of the spindle motor 43 is 80% or more of the command speed (S18). If the controller 61 determines that the rotation speed of the spindle motor 43 is not 80% or more of the command speed (S18: NO), the controller 61 returns the processing to step S16. In step S16, the controller 61 stores each estimated tool inertia Jm in the auxiliary storage unit 63 without deleting the tool inertia Jm estimated up to the previous time.

If the controller 61 determines that the rotation speed of the spindle motor 43 is 80% or more of the command speed (S18: YES), the controller 61 calculates an average of the tool inertias Jm (S19). Instead of the average, a median or a mode of the tool inertias Jm may be used. That is, the total of the tool inertias Jm is divided by the number of estimations. The controller 61 stores the average of the tool inertias Jm in the main storage unit 62 or the auxiliary storage unit 63 (S20), and resets the number of estimations (S21). The controller 61 determines whether the rotation speed of the spindle motor 43 reaches the command speed (S22). If the controller 61 determines that the rotation speed of the spindle motor 43 does not reach the command speed (S22: NO), the controller 61 returns the processing to step S22. When the rotation speed of the spindle motor 43 reaches the command speed, the spindle motor 43 rotates at the command speed, that is, at a constant speed. Processing of steps S16, S17, and S19 to S21 executed by the controller 61 constitutes estimation processing. The controller 61 executes the processing of steps S16, S17, and S19 to S21 during acceleration of the spindle motor 43.

If the controller 61 determines that the rotation speed of the spindle motor 43 reaches the command speed (S22: YES), the controller 61 determines the speed proportional gain of the spindle 51 (S23). As described above, the variable Kvp indicating the speed proportional gain stores K0. The total inertia Jt is the sum of the inertia Jsp of the spindle 51 to which no tool is attached and the estimated tool inertia Jm. The controller 61 multiplies K0 by the total inertia Jt / the inertia Jsp of the spindle 51 to which no tool is attached. That is, K0 is multiplied by a ratio of Jt to Jsp. A multiplication result is the determined speed proportional gain. The controller 61 stores the determined speed proportional gain in the variable Kvp. The controller 61 drives the spindle 51 at the determined speed proportional gain (S24). That is, when the spindle motor 43 rotates at a constant speed, the controller 61 uses the determined speed proportional gain. The controller 61 machines the workpiece while the spindle motor 43 rotates at a constant speed. The determined speed proportional gain is used during machining of the workpiece. The controller 61 advances the processing to step S5. Processing of step S23 executed by the controller 61 constitutes determination processing. Processing of step S24 executed by the controller 61 constitutes drive processing.

If the controller 61 determines in step S9 that the read command is the stop command (S9: YES), that is, if the controller 61 determines that the read command is M141, the controller 61 returns the speed proportional gain to the initial value K0 (S11). That is, K0 is stored in the variable Kvp. The controller 61 synchronously starts deceleration of the spindle motor 43 and the C-axis motor 3c (S12). The controller 61 determines whether the spindle motor 43 is stopped (S13). If the controller 61 determines that the spindle motor 43 is not stopped (S13: NO), the controller 61 returns the processing to step S13. If the controller 61 determines that the spindle motor 43 is stopped (S13: YES), the controller 61 advances the processing to step S5. Processing of step S11 executed by the controller 61 constitutes change processing.

In the machine tool 100 according to Embodiment 1, the inertia of the spindle 51 is estimated, the speed proportional gain of the spindle motor 43 is determined based on the estimated inertia, and the spindle 51 is driven with the determined speed proportional gain. Therefore, even when the inertia of the spindle 51 increases, the spindle 51 can be driven with a speed proportional gain corresponding to the increased inertia, and a decrease in the responsiveness of the spindle 51 can be prevented. Since the inertia of the spindle 51 is estimated during the acceleration of the spindle 51, that is, before the machining, time before the machining can be effectively utilized.

When the spindle 51 decelerates after the speed proportional gain is determined, the speed proportional gain is returned to a speed proportional gain before the determination, for example, the initial value. For example, the speed proportional gain is increased during the machining of the workpiece to make the rotation of the spindle 51 suitable for the skiving machining, and the speed proportional gain is returned to the initial value after the machining of the workpiece is finished to stabilize the rotation of the spindle 51.

When the spindle 51 to which the tool 52 is attached and the holding table 3d that holds the workpiece are synchronously controlled, the inertia of the spindle 51 is estimated, and a speed adjustment gain is determined based on the estimated inertia.

In Embodiment 1, the inertia of the spindle 51 is estimated, the speed proportional gain of the spindle motor 43 is determined based on the estimated inertia, and the spindle 51 is driven with the determined speed proportional gain. The same control may be performed on another shaft. For example, an inertia of the holding table 3d may be estimated, a speed proportional gain of the C-axis motor 3c may be determined based on the estimated inertia, and the holding table 3d may be driven with the determined speed proportional gain.

### (Embodiment 2)

Hereinafter, the present invention will be described with reference to the drawings illustrating the machine tool 100 according to Embodiment 2. In a configuration of the machine tool 100 according to Embodiment 2, components the same as those in Embodiment 1 are denoted by the same reference numerals, and detailed description thereof will be omitted.

The machine tool 100 includes a tool magazine (not illustrated) that houses a plurality of tools 52. The tool magazine includes a plurality of arms (not illustrated) that hold the tools 52. When the tool 52 is attached to the spindle 51, the controller 61 positions the arm holding the tool 52 at the tool change position. The spindle 51 is located immediately above the arm at the tool change position. The controller 61 lowers the spindle 51 and attaches the tool 52 on the arm to the spindle 51. When the tool 52 is attached to the spindle 51, the controller 61 stores, in the main storage unit 62 or the auxiliary storage unit 63, a number for identifying the tool 52 attached to the spindle 51 in association with the spindle 51.

When the tool 52 is to be detached from the spindle 51, the controller 61 positions an empty arm to the tool change position. The tool 52 attached to the spindle 51 is located immediately below the arm at the tool change position. The controller 61 raises the spindle 51 and transfers the tool 52 on the spindle 51 to the arm. When the tool 52 is detached from the spindle 51, the controller 61 deletes the number for identifying the tool 52 in association with the spindle 51 from the main storage unit 62 or the auxiliary storage unit 63.

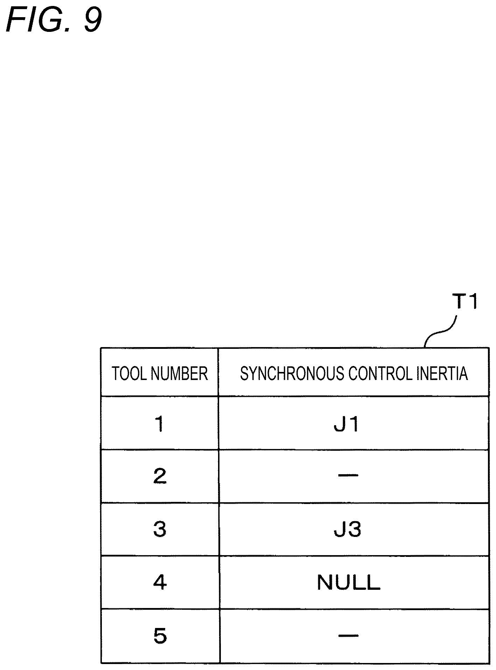

FIG. 9 is a conceptual diagram illustrating a table T1 storing tool numbers and synchronous control inertias. The auxiliary storage unit 63 is configured to store the inertia of the spindle 51 for synchronous control in association with the tool number of each tool. For example, as illustrated in FIG. 9, the auxiliary storage unit 63 stores the table T1. The table T1 includes a "tool number" column and a "synchronous control inertia" column. The "tool number" column stores the numbers for identifying the tools 52. The "synchronous control inertia" column stores the inertias in association with the tool numbers. The inertia stored in the "synchronous control inertia" column is the inertia of the spindle 51 to which the tool 52 indicated by the tool number is attached.

For example, the table T1 stores an inertia J1 in association with a tool number 1, and stores an inertia J3 in association with a tool number 3. The inertia J1 is the inertia of the spindle 51 to which the tool 52 indicated by the tool number 1 is attached. The inertia J3 is the inertia of the spindle 51 to which the tool 52 indicated by the tool number 3 is attached. "NULL" stored in the "synchronous control inertia" column indicates that the inertia is not stored. For example, although the tool 52 indicated by a tool number 4 is a target of the synchronous control, the inertia is not stored in association with the tool number 4. "-" stored in the "synchronous control inertia" column indicates that the tool 52 indicated by the tool number is not the tool 52 that can be synchronously controlled. For example, tools indicated by tool numbers 2 and 5 are not targets of the synchronous control, and no inertia is stored in association with the tool numbers 2 and 5. When each of the tools 52 indicated by the tool numbers 2 and 5 is attached to the spindle 51, the controller 61 does not execute the synchronous control.

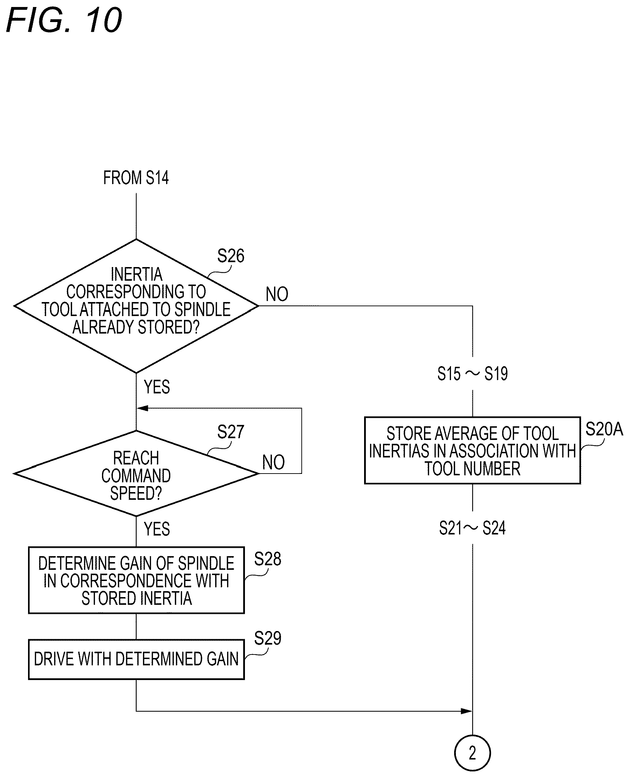

FIG. 10 is a flowchart illustrating an example of the machining processing executed by the controller 61. Also in Embodiment 2, processing the same as in that of steps S1 to S19 and S21 to S24 in Embodiment 1 is executed, and the detailed description thereof will be omitted. Here, processing of steps S20A and S26 to S30 will be mainly described.

After synchronously starting the acceleration of the spindle motor 43 and the C-axis motor 3c (S14), the controller 61 determines, referring to the table T1, whether the inertia corresponding to the tool number of the tool 52 attached to the spindle 51 is already stored in the auxiliary storage unit 63 (S26).

If the controller 61 determines that the inertia corresponding to the tool number of the tool 52 attached to the spindle 51 is already stored in the auxiliary storage unit 63 (S26: YES), for example, when the tool number of the tool 52 attached to the spindle 51 is 1 or 3, the controller 61 determines whether the rotation speed of the spindle motor 43 reaches the command speed (S27). If the controller 61 determines that the rotation speed of the spindle motor 43 does not reach the command speed (S27: NO), the controller 61 returns the processing to step S27.

If the controller 61 determines that the rotation speed of the spindle motor 43 reaches the command speed (S27: YES), the controller 61 determines the speed proportional gain of the spindle 51 in correspondence with the inertia corresponding to the tool number of the tool 52 attached to the spindle 51 (S28). The controller 61 sets the determined speed proportional gain as a speed proportional gain to be used for rotation control for the spindle 51. The controller 61 drives the spindle 51 with the determined speed proportional gain (S29). The controller 61 advances the processing to step S5.

If the controller 61 determines that the inertia corresponding to the tool number of the tool 52 attached to the spindle 51 is not stored in the auxiliary storage unit 63 (S26: NO), for example, when the tool number of the tool 52 attached to the spindle 51 is 4, the controller 61 executes the processing of steps S15 to S19, and stores an average of the tool inertias Jm in the main storage unit 62 or the auxiliary storage unit 63 in association with the tool number of the tool 52 attached to the spindle 51 (S20A). For example, the average of the tool inertias Jm is stored in the synchronous control inertia column corresponding to the tool number 4 in the table T1. The controller 61 executes processing of steps S21 to S24 and advances the processing to step S5. The processing of step S20A executed by the controller 61 constitutes storage processing. The controller 61 executes the processing of steps S16, S17, S19, S20A, and S21 during the acceleration of the spindle motor 43.

In the machine tool 100 according to Embodiment 2, when the speed proportional gain corresponding to the tool 52 attached to the spindle 51 is stored, the stored speed proportional gain is determined as the speed proportional gain of the spindle motor 43. When the speed proportional gain corresponding to the tool 52 attached to the spindle 51 is not stored, the speed proportional gain is determined based on the inertia and stored.

### (Embodiment 3)

Hereinafter, the present invention will be described with reference to the drawings illustrating the machine tool 100 according to Embodiment 3. In a configuration of the machine tool 100 according to Embodiment 3, components the same as those in Embodiment 1 or 2 are denoted by the same reference numerals, and detailed description thereof will be omitted.

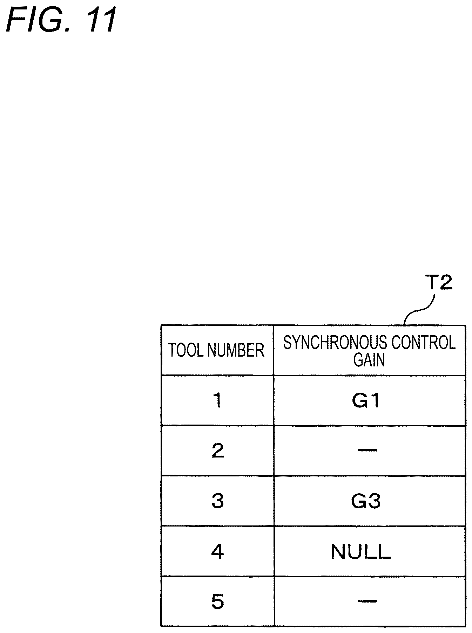

FIG. 11 is a conceptual diagram illustrating a table T2 storing the tool numbers and synchronous control gains. The auxiliary storage unit 63 stores the gain of the spindle 51 for the synchronous control in association with the tool number of each tool 52. For example, as illustrated in FIG. 11, the auxiliary storage unit 63 stores the table T2. The table T2 includes a "tool number" column and a "synchronous control gain" column. The "tool number" column stores the numbers for identifying the tools 52. The "synchronous control gain" column stores the speed proportional gains in association with the tool numbers. The speed proportional gain stored in the "synchronous control gain" column is the gain of the spindle 51 to which the tool 52 indicated by the tool number is attached.

For example, the table T2 stores a speed proportional gain G1 in association with the tool number 1, and stores a speed proportional gain G3 in association with the tool number 3. The speed proportional gain G1 is a speed proportional gain of the spindle 51 to which the tool indicated by the tool number 1 is attached. The speed proportional gain G3 is a speed proportional gain of the spindle 51 to which the tool 52 indicated by the tool number 3 is attached. "NULL" stored in the "synchronous control gain" column indicates that the speed proportional gain is not stored. For example, although the tool 52 indicated by the tool number 4 is a target of the synchronous control, the speed proportional gain is not stored in association with the tool number 4. "-" stored in the "synchronous control gain" column indicates that the tool 52 indicated by the tool number is not the tool 52 that can be synchronously controlled. For example, the tools 52 indicated by the tool numbers 2 and 5 are not targets of the synchronous control, and no speed proportional gain is stored in association with the tool numbers 2 and 5. When each of the tools 52 indicated by the tool numbers 2 and 5 is attached to the spindle 51, the controller 61 does not execute the synchronous control.

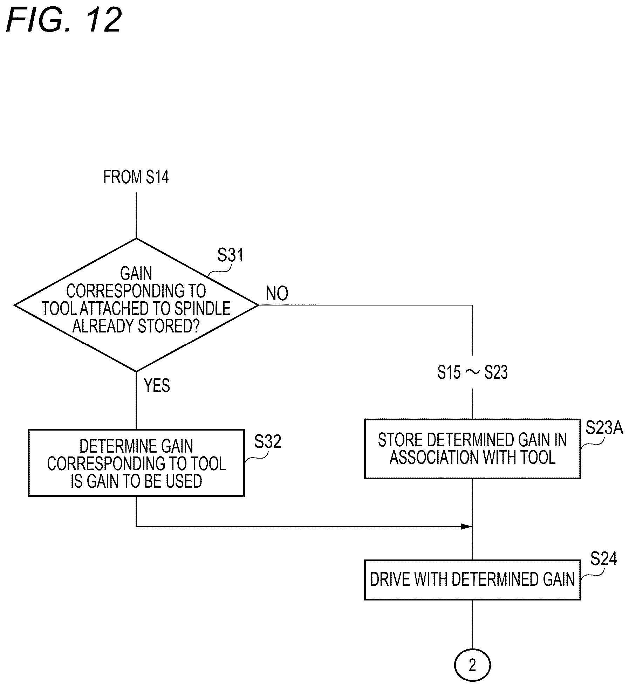

FIG. 12 is a flowchart illustrating an example of the machining processing executed by the controller 61. Also in Embodiment 3, processing the same as that of steps S1 to S23 and S24 in Embodiment 1 is executed, and the detailed description thereof will be omitted. Here, processing of steps S23A, S31, and S32 will be mainly described.

After synchronously starting the acceleration of the spindle motor 43 and the C-axis motor 3c (S14), the controller 61 determines, referring to the table T2, whether the speed proportional gain corresponding to the tool number of the tool 52 attached to the spindle 51 is already stored in the auxiliary storage unit 63 (S31). The processing of step S31 executed by the controller 61 constitutes second determination processing.

If the controller 61 determines that the speed proportional gain corresponding to the tool number of the tool 52 attached to the spindle 51 is already stored in the auxiliary storage unit 63 (S31: YES), for example, when the tool number of the tool 52 attached to the spindle 51 is 1 or 3, the controller 61 determines the speed proportional gain, which is already stored in the auxiliary storage unit 63 and corresponds to the tool number of the tool 52 attached to the spindle 51, as the speed proportional gain to be used for the rotation control for the spindle 51 (S32). The controller 61 drives the spindle 51 with the determined speed proportional gain (S24), and advances the processing to step S5. The processing of step S32 executed by the controller 61 constitutes second determination processing.

If the controller 61 determines that the speed proportional gain corresponding to the tool number of the tool 52 attached to the spindle 51 is not stored in the auxiliary storage unit 63 (S31: NO), for example, when the tool number of the tool 52 attached to the spindle 51 is 4, the controller 61 executes the processing of steps S15 to S23, and stores the determined speed proportional gain in association with the tool number of the tool 52 attached to the spindle 51 (S23A). For example, the determined speed proportional gain is stored in the synchronous control gain column corresponding to the tool number 4 in the table T2. The controller 61 drives the spindle 51 with the determined speed proportional gain (S24), and advances the processing to step S5. The processing of step S23A executed by the controller 61 constitutes second storage processing.

In the machine tool according to Embodiment 3, when the speed proportional gain corresponding to the tool 52 attached to the spindle 51 is stored, the stored speed proportional gain is determined as the speed proportional gain of the spindle motor 43. When the speed proportional gain corresponding to the tool 52 attached to the spindle 51 is not stored, the speed proportional gain is determined based on the inertia and stored in association with the tool 52 attached to the spindle 51. The determined speed proportional gain is the speed proportional gain used when the spindle motor 43 rotates at a constant speed.

### (Embodiment 4)

Hereinafter, the present invention will be described with reference to the drawings illustrating the machine tool 100 according to Embodiment 4. In a configuration of the machine tool 100 according to Embodiment 4, components the same as those in Embodiments 1 to 3 are denoted by the same reference numerals, and detailed description thereof will be omitted. In Embodiment 4, the auxiliary storage unit 63 stores in advance a threshold value Th to be compared with the estimated tool inertia Jm. When the estimated tool inertia Jm is equal to or greater than the threshold value Th, the responsiveness of the spindle 51 may significantly decrease.

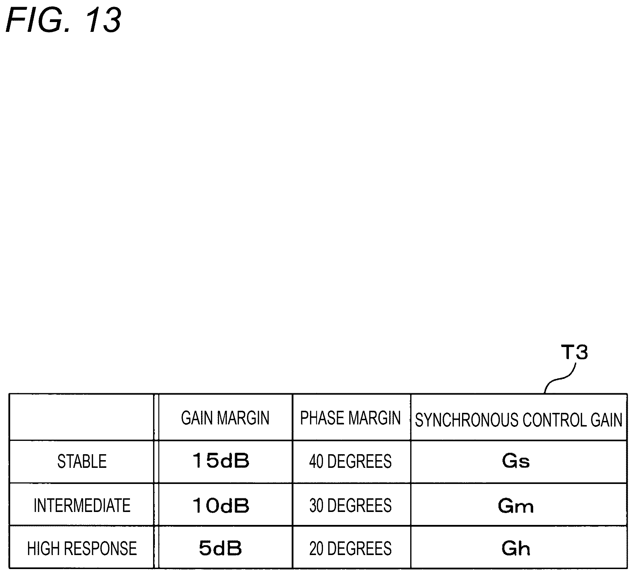

FIG. 13 is a conceptual diagram illustrating a table T3 storing gain margins, phase margins, and synchronous control gains. The auxiliary storage unit 63 stores the table T3. The table T3 stores the gain margins, the phase margins, and the synchronous control gains. The table T3 stores the gain margin, the phase margin, and the synchronous control gain for each of three cases of "stable", "intermediate", and "high response".

The "stable" indicates the gain margin, the phase margin, and the synchronous control gain for stably rotating the spindle 51. The "high response" indicates the gain margin, the phase margin, and the synchronous control gain for achieving high responsiveness when the inertia of the spindle 51 increases. The "intermediate" indicates the gain margin, the phase margin, and the synchronous control gain used in a normal state, and indicates the gain margin, the phase margin, and the synchronous control gain in an initial state. The following gain margin, phase margin, and synchronous control gain are obtained by an experiment when no tool is attached.

For example, in the case of the "stable", the gain margin is 15 dB, and the phase margin is 40 degrees. A synchronous control gain Gs in the case of the "stable" is a speed proportional gain having the gain margin of approximately 15 dB and the phase margin of approximately 40 degrees.

For example, in the case of the "high response", the gain margin is 5 dB, and the phase margin is 20 degrees. A synchronous control gain Gh in the case of the "high response" is a speed proportional gain having the gain margin of approximately 5 dB and the phase margin of approximately 20 degrees.

For example, in the case of the "intermediate", the gain margin is 10 dB, and the phase margin is 30 degrees. A synchronous control gain Gm in the "intermediate" case is a speed proportional gain having the gain margin of approximately 10 dB and the phase margin of approximately 30 degrees.

An operator can operate the reception unit 67 to select one of the "stable", the "high response", and the "intermediate". When performing the synchronous control, the controller 61 uses the selected speed proportional gain in the "stable" case, the "high response" case, or the "intermediate" case for controlling the spindle motor 43.

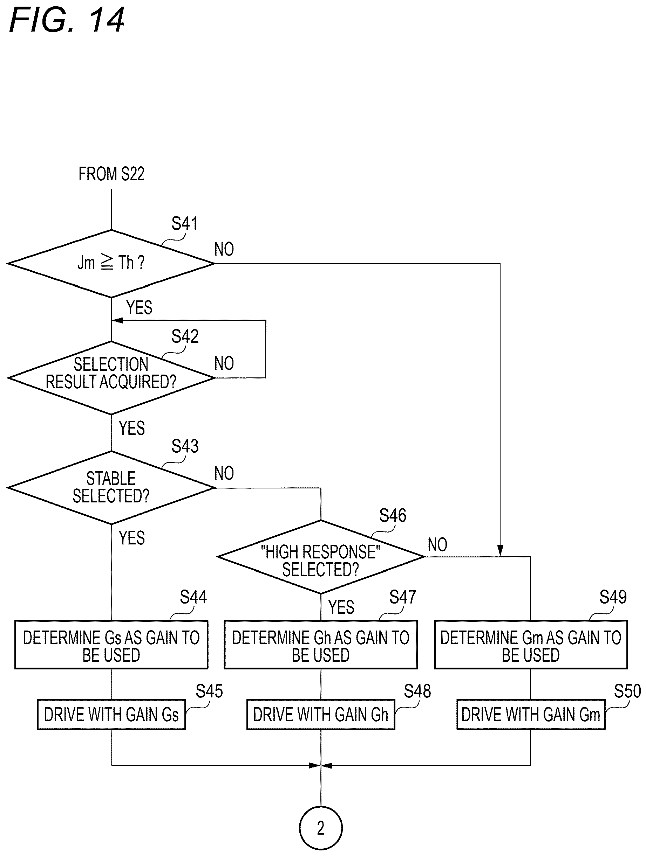

FIG. 14 is a flowchart illustrating an example of the machining processing executed by the controller 61. Also in Embodiment 4, processing the same as that of steps S1 to S22 in Embodiment 1 is executed, and the detailed description thereof will be omitted. Here, processing of step S41 to S47 will be mainly described.

The controller 61 determines whether the estimated tool inertia Jm is equal to or greater than the threshold value Th (S41). If the controller 61 determines that the estimated tool inertia Jm is equal to or greater than the threshold value Th (S41: YES), the controller 61 determines whether a selection result of any one of the "stable", the "high response", and the "intermediate" is acquired (S42). For example, the controller 61 displays the "stable", the "high response", and the "intermediate" on the display screen, and displays a message prompting the operator to select one of them. When the operator operates the reception unit 67 to select one of the "stable", the "high response", and the "intermediate", the controller 61 acquires a signal indicating one of the "stable", the "high response", and the "intermediate" from the reception unit 67.

If the controller 61 determines that the selection result of any one is not acquired (S42: NO), the controller 61 returns the processing to step S42. If the controller 61 determines that the selection result of any one is acquired (S42: YES), the controller 61 determines whether the "stable" is selected (S43). If the controller 61 determines that the "stable" is selected (S43: YES), the controller 61 determines the speed proportional gain Gs as the speed proportional gain to be used for the rotation control for the spindle 51 (S44), and drives the spindle 51 with the determined speed proportional gain Gs (S45). The controller 61 advances the processing to step S5.

If the controller 61 determines that the "stable" is not selected (S43: NO), the controller 61 determines whether the "high response" is selected (S46). If the controller 61 determines that the "high response" is selected (S46: YES), the controller 61 determines the speed proportional gain Gh as the speed proportional gain to be used for the rotation control for the spindle 51 (S47), and drives the spindle 51 with the determined speed proportional gain Gh (S48). The controller 61 advances the processing to step S5.

If the controller 61 determines that the "high response" is not selected (S46: NO), that is, when the controller 61 determines that the "intermediate" is selected, the controller 61 determines the speed proportional gain Gm as the speed proportional gain to be used for the rotation control for the spindle 51 (S49), and drives the spindle 51 with the determined speed proportional gain Gm (S50). The controller 61 advances the processing to step S5. The processing of steps S44, S47, and S49 executed by the controller 61 constitutes determination processing.

If the controller 61 determines in step S41 that the estimated tool inertia Jm is less than the threshold value Th (S41: NO), the controller 61 uses the speed proportional gain Gm for the rotation control for the spindle 51 (S50). The controller 61 advances the processing to step S5. When the estimated tool inertia Jm is less than the threshold value Th, the decrease in the responsiveness of the spindle 51 is not significant, and thus the speed proportional gain Gm, that is, the initial value of the speed proportional gain is used.

In the machine tool 100 according to Embodiment 4, when the spindle 51 to which the tool 52 is attached and the holding table 3d that holds the workpiece are synchronously controlled, one gain of the three speed proportional gains Gs, Gm, and Gh is determined as the speed proportional gain of the spindle motor 43. The controller 61 uses any determined one of the speed proportional gains Gs, Gm, and Gh for the spindle motor 43.

For example, when the "intermediate" is selected in the initial machining processing and a synchronization error is found, the user can select the "high response" in the subsequent machining processing. For example, in a case in which the "intermediate" is selected in the initial machining processing and occurrence of abnormal sound is found, the user can select the "stable" in the subsequent machining processing.

The tool inertia is estimated in Embodiment 4, but the speed proportional gain may be determined without estimating the tool inertia. For example, steps S15 to S21 and S41 of the machining processing may be omitted, and the processing of steps S42 to S50 may be executed after the processing of step S22. In this case, the controller 61 determines any one of the speed proportional gains Gs, Gm, and Gh as the speed proportional gain of the spindle motor 43 based only on the selection result in step S42.

The machining processing (see FIGS. 7 and 8) may be applied not only to the case in which the spindle motor 43 and the C-axis motor 3c are synchronously rotated but also to the case in which the spindle motor 43 and the X-axis motor 23, the Y-axis motor 13, the Z-axis motor 33, or the A-axis motor 3a are synchronously rotated.

It should be understood that the embodiments disclosed herein are illustrative in all respects and not restrictive. The scope of the present invention is intended to include all modifications within the scope of the claims and the scope equivalent to the scope of the claims. The matters described in the embodiments can be combined with each other. The independent claims and the dependent claims described in the claims can be combined with each other in all combinations regardless of the citation form. Furthermore, although a format (multi-claim format) that describes a claim citing two or more other claims is used in the claims, the present invention is not limited thereto. A format that describes a multi-claim (multi-multi-claim) citing at least one multi-claim may be described.

As described above, the present specification discloses the following matters:
(1) A control device that controls a rotation shaft of a machine tool,
   in which the control device is configured to execute:
   estimation processing of estimating an inertia of the rotation shaft;
   determination processing of determining a gain of a drive unit configured to drive the rotation shaft, based on the inertia estimated by the estimation processing; and
   drive processing of driving the rotation shaft with the gain determined in the determination processing, the rotation shaft reaching a target speed.
   In one embodiment of the present disclosure, the inertia of the rotation shaft is estimated, the gain of the drive unit is determined based on the estimated inertia, and the rotation shaft is driven with the determined gain.
(2) The control device according to (1),
   in which the control device is further configured to execute:
   determination processing of determining whether the rotation shaft decelerates; and
   change processing of changing the gain of the drive unit to a gain before execution of the determination processing, in a case where the control device determines in the determination processing that the rotation shaft decelerates after the execution of the determination processing.
   In one embodiment of the present disclosure, when the rotation shaft decelerates after the gain is determined, the gain of the drive unit is returned to the gain before the determination.
(3) The control device according to (1) or (2),
   in which a tool is attached to the rotation shaft, and
   the control device is further configured to execute a storage processing of storing, in a storage unit, the inertia estimated in the estimation processing or the gain determined in the determination processing in association with information indicating the tool attached to the rotation shaft.
   In one embodiment of the present disclosure, the estimated inertia or the determined gain is stored in association with information indicating the tool attached to the rotation shaft.
(4) The control device according to (3),
   in which the control device is further configured to execute:
   second determination processing of determining whether a gain corresponding to the tool attached to the rotation shaft is stored in the storage unit;
   second determination processing of determining the gain stored in the storage unit as the gain of the drive unit, in a case where the control device determines that the gain corresponding to the tool attached to the rotation shaft is stored in the storage unit;
   the estimation processing and the determination processing, in a case where the control device determines that the gain corresponding to the tool attached to the rotation shaft is not stored in the storage unit; and
   second storage processing of storing, in the storage unit, the gain of the drive unit determined in the determination processing in association with the information indicating the tool attached to the rotation shaft.
   In one embodiment of the present disclosure, when the gain corresponding to the tool attached to the rotation shaft is stored, the stored gain is determined as the gain of the drive unit. When the gain corresponding to the tool attached to the rotation shaft is not stored, the gain is determined based on the inertia and stored.
(5) The control device according to (1) or (2),
   in which a tool is attached to the rotation shaft, and
   the control device is further configured to execute:
      third determination processing of determining whether the rotation shaft and a second rotation shaft configured to hold a workpiece are synchronously controlled; and
      the estimation processing and the determination processing, in a case where the control device determines that the rotation shaft and the second rotation shaft are synchronously controlled.
   In one embodiment of the present disclosure, when the rotation shaft to which the tool is attached and the second rotation shaft holding a workpiece are synchronously controlled, the inertia is estimated, and the gain is determined based on the estimated inertia.
(6) The control device according to (5), including:
   a second storage unit configured to store a plurality of gains of the drive unit,
   in which in a case where the control device determines that the rotation shaft and the second rotation shaft are synchronously controlled, the control device determines one of the gains stored in the second storage unit, as the gain of the drive unit, in the determination processing.
   In one embodiment of the present disclosure, when the rotation shaft to which the tool is attached and the second rotation shaft holding a workpiece are synchronously controlled, one gain of the plurality of gains is determined as the gain of the drive unit.
(7) A machine tool including:
   a rotation shaft; and
   a control device configured to control the rotation shaft,
   in which the control device is configured to execute:
      estimation processing of estimating an inertia of the rotation shaft;
      determination processing of determining a gain of a drive unit configured to drive the rotation shaft, based on the inertia estimated by the estimation processing; and
      drive processing of driving the rotation shaft with the gain determined in the determination processing, the rotation shaft reaching a target speed.
   In one embodiment of the present disclosure, the inertia of the rotation shaft is estimated, the gain of the drive unit is determined based on the estimated inertia, and the rotation shaft is driven with the determined gain.
(8) A control method for controlling a rotation shaft of a machine tool, the control method including:
   estimation processing of estimating an inertia of the rotation shaft;
   determination processing of determining a gain of a drive unit configured to drive the rotation shaft, based on the inertia estimated by the estimation processing; and
   drive processing of driving the rotation shaft with the gain determined in the determination processing, the rotation shaft reaching a target speed.
   In one embodiment of the present disclosure, the inertia of the rotation shaft is estimated, the gain of the drive unit is determined based on the estimated inertia, and the rotation shaft is driven with the determined gain.
(9) A computer program including instructions which, when the program is executed by a control device configured to control a rotation shaft of a machine tool, cause the control device to execute:
   estimation processing of estimating an inertia of the rotation shaft,
   determination processing of determining a gain of a drive unit configured to drive the rotation shaft, based on the inertia estimated by the estimation processing, and
   drive processing of driving the rotation shaft with the gain determined in the determination processing, the rotation shaft reaching a target speed.

In one embodiment of the present disclosure, the inertia of the rotation shaft is estimated, the gain of the drive unit is determined based on the estimated inertia, and the rotation shaft is driven with the determined gain.

In the control device, the machine tool, the control method, and the computer program according to the embodiment of the present disclosure, the inertia of the rotation shaft is estimated, the gain of the drive unit is determined based on the estimated inertia, and the rotation shaft is driven with the determined gain. Therefore, even when the inertia of the rotation shaft increases, the rotation shaft can be driven with a gain corresponding to the increased inertia, and a decrease in responsiveness of the rotation shaft can be prevented.

## Claims

1. A control device that controls a rotation shaft of a machine tool,
wherein the control device is configured to execute:
estimation processing of estimating an inertia of the rotation shaft;
determination processing of determining a gain of a drive unit configured to drive the rotation shaft, based on the inertia estimated by the estimation processing; and
drive processing of driving the rotation shaft with the gain determined in the determination processing, the rotation shaft reaching a target speed.

2. The control device according to claim 1,
wherein the control device is further configured to execute:
determination processing of determining whether the rotation shaft decelerates; and
change processing of changing the gain of the drive unit to a gain before execution of the determination processing, in a case where the control device determines in the determination processing that the rotation shaft decelerates after the execution of the determination processing.

3. The control device according to claim 1 or 2,
wherein a tool is attached to the rotation shaft, and
the control device is further configured to execute a storage processing of storing, in a storage unit, the inertia estimated in the estimation processing or the gain determined in the determination processing in association with information indicating the tool attached to the rotation shaft.

4. The control device according to claim 3,
wherein the control device is further configured to execute:
second determination processing of determining whether a gain corresponding to the tool attached to the rotation shaft is stored in the storage unit;
second determination processing of determining the gain stored in the storage unit as the gain of the drive unit, in a case where the control device determines that the gain corresponding to the tool attached to the rotation shaft is stored in the storage unit;
the estimation processing and the determination processing, in a case where the control device determines that the gain corresponding to the tool attached to the rotation shaft is not stored in the storage unit; and
second storage processing of storing, in the storage unit, the gain of the drive unit determined in the determination processing in association with the information indicating the tool attached to the rotation shaft.

5. The control device according to claim 1 or 2,
wherein a tool is attached to the rotation shaft, and
the control device is further configured to execute:
third determination processing of determining whether the rotation shaft and a second rotation shaft configured to hold a workpiece are synchronously controlled; and
the estimation processing and the determination processing, in a case where the control device determines that the rotation shaft and the second rotation shaft are synchronously controlled.

6. The control device according to claim 5, comprising:
a second storage unit configured to store a plurality of gains of the drive unit,
wherein in a case where the control device determines that the rotation shaft and the second rotation shaft are synchronously controlled, the control device determines one of the gains stored in the second storage unit, as the gain of the drive unit, in the determination processing.

7. A machine tool comprising:
a rotation shaft; and
a control device configured to control the rotation shaft,
wherein the control device is configured to execute:
estimation processing of estimating an inertia of the rotation shaft;
determination processing of determining a gain of a drive unit configured to drive the rotation shaft, based on the inertia estimated by the estimation processing; and
drive processing of driving the rotation shaft with the gain determined in the determination processing, the rotation shaft reaching a target speed.

8. A control method for controlling a rotation shaft of a machine tool, the control method comprising:
estimation processing of estimating an inertia of the rotation shaft;
determination processing of determining a gain of a drive unit configured to drive the rotation shaft, based on the inertia estimated by the estimation processing; and
drive processing of driving the rotation shaft with the gain determined in the determination processing, the rotation shaft reaching a target speed.

9. A computer program comprising instructions which, when the program is executed by a control device configured to control a rotation shaft of a machine tool, cause the control device to execute:
estimation processing of estimating an inertia of the rotation shaft,
determination processing of determining a gain of a drive unit configured to drive the rotation shaft, based on the inertia estimated by the estimation processing, and
drive processing of driving the rotation shaft with the gain determined in the determination processing, the rotation shaft reaching a target speed.
